# FASCICULE DE BREVET EUROPEEN

(11) **EP 2 066 514 B1**
(45) Date de publication et mention de la délivrance du brevet: **24.11.2010**
(21) Numéro de dépôt: 07823836.7
(22) Date de dépôt: 14.09.2007
(51) Int. Cl.: B60J 10/00

(54) **AGENCEMENT DE PORTE DE VEHICULE AUTOMOBILE POUR LA LIAISON ENTRE DEUX PROFILES**
AUTOMOBILTÜRENANORDNUNG ZUR VERKNÜPFUNG ZWEIER PROFILE
AUTOMOTIVE VEHICLE DOOR ARRAGEMENT FOR THE LINK BETWEEN TWO PROFILES

(30) Priorité: 27.09.2006 FR 0608485
(43) Date de publication de la demande: 10.06.2009
(73) Titulaire: Renault S.A.S., 92100 Boulogne-Billancourt (FR)
(72) Inventeur: BOUILLON, Jean-Charles, 78940 La Queue Lez Yvelines (FR)
(86) Numéro de dépôt international: PCT/FR2007/051941
(87) Numéro de publication internationale: WO 2008/037906

(56) Documents cités:
- EP-A1- 0 678 412
- US-B1- 6 811 194

## Description

L'invention concerne la liaison entre deux profilés sur une porte de véhicule automobile, et plus spécifiquement entre un profilé d'habillage de cadre d'une porte de véhicule automobile et un bandeau de panneau de porte.

L'ouverture destinée à la vitre d'une porte de véhicule automobile comporte deux types de finition sur ses bords : sur le bord horizontal, destiné à recevoir le coude du conducteur ou du passager, est prévu un bandeau de panneau de porte, comportant une face horizontale d'appui, tandis que les autres bords sont recouverts d'un profilé d'habillage de cadre plus simple fixé sur le cadre métallique de l'ouverture.

Il est essentiel d'avoir après montage une liaison correcte entre l'habillage et le bandeau, pratiquement sans jeu.

Pour y parvenir, la solution classique consiste à prévoir d'emblée un ajustement très serré entre l'habillage et le bandeau. Cependant, compte tenu de la géométrie particulière de ces pièces et d'un certain effet de coin dû au fait que l'angle entre les deux pièces n'est pas parfaitement droit mais plutôt obtus, ceci engendre des efforts de montage très importants qui ne sont pas compatibles avec les cadences imposées au montage.

Le document EP 0 678 412 A décrit un agencement de porte de véhicule selon le préambule de la revendication indépendante.

Il est donc connu de ne pas fixer mais au contraire de laisser libre et souple la partie inférieure de l'habillage (par exemple les 150 derniers millimètres) pour faciliter le montage postérieur du bandeau. Cependant, cela risque de créer un jeu visible après le montage. Pour y remédier, il est connu de placer derrière l'extrémité de l'habillage, entre l'habillage et le cadre métallique, un bloc élastique qui permet un léger enfoncement de l'habillage pendant le montage mais agit comme un ressort pour repousser l'habillage en appui contre le bandeau une fois le montage terminé. Ce bloc élastique, en mousse, peut poser divers problèmes. D'une part, il ajoute au montage un temps de pose indésirable ; d'autre part, son comportement au vieillissement n'est pas certain, il peut se décoller, etc.

Le but de l'invention est de proposer une solution nouvelle à ce problème, qui permette d'assurer un montage aisé entre l'habillage de cadre et le bandeau de panneau de porte, sans jeu ultérieur.

L'invention atteint son but grâce à un agencement de porte de véhicule automobile comportant un cadre entourant une ouverture dotée d'au moins un premier côté et d'un second côté faisant entre eux un angle proche d'un angle droit, le premier côté étant couvert d'un premier profilé non fixé au cadre dans la zone dudit angle, le second côté étant couvert d'un second profilé venant recouvrir l'extrémité du premier profilé dans la zone dudit angle, **caractérisé en ce que** le premier profilé et le second profilé comportent dans la zone dudit angle recouverte par le second profilé un premier et un second relief susceptibles de venir en appui l'un sur l'autre lors du montage du second profilé sur l'extrémité du premier profilé, les formes du premier et du second relief étant agencées pour que leur appui mutuel engendre une force de rapprochement entre le premier profilé et le second profilé. Grâce à cette disposition, par simple effet de réaction lors du montage, les deux profilés se rapprochent automatiquement l'une de l'autre, dans une direction définie par la forme respective des reliefs, et permettent la suppression effective du jeu entre les deux profilés et la fixation définitive de la liaison.

Selon une première forme de réalisation, le premier relief est une rampe oblique formée sur le premier profilé et le second relief est un doigt formé sous le second profilé de manière à rencontrer la rampe oblique.

La rampe peut être oblique dans deux directions transversales de manière à forcer le rapprochement dans deux directions simultanément.

Selon une seconde forme de réalisation, le premier relief est un bord formé sur une saillie attachée au premier profilé et le second relief est une rampe formée sous le second profilé. En particulier, le premier relief peut être le bord d'un trou formé dans ladite saillie attachée au premier profilé et le second relief une rampe formée à l'extrémité d'un doigt attaché sous le second profilé.

Le premier relief et/ou le second relief sont de préférence venus de moulage avec le premier profilé et le second profilé respectivement, de sorte qu'il n'y a aucune opération supplémentaire de montage à prévoir.

Le premier profilé est par exemple un montant de l'habillage de cadre et le second profilé est alors le bandeau de panneau de porte.

D'autres caractéristiques et avantages de l'invention apparaîtront à la lecture de la description suivante, en référence aux dessins annexés sur lesquels :
- la figure 1 représente en vue de face une porte de véhicule automobile dont le cadre de fenêtre comporte un habillage de cadre et un bandeau de panneau de porte conformes à un premier mode de réalisation de l'invention.
- la figure 2 montre en perspective avant un agrandissement du détail A de la figure 1.
- la figure 3 représente en perspective avant le bas de l'habillage de cadre conforme à l'invention au niveau de sa liaison avec le bandeau de porte.
- la figure 4 représente en perspective de ¾ arrière le bandeau de panneau porte conforme à l'invention.
- la figure 5 est une vue schématique de principe du premier mode de réalisation de l'invention.
- la figure 6 est une vue schématique de principe d'un second mode de réalisation de l'invention.
- la figure 7 représente en perspective la vue du dessous du bandeau de panneau dans le second mode de réalisation.

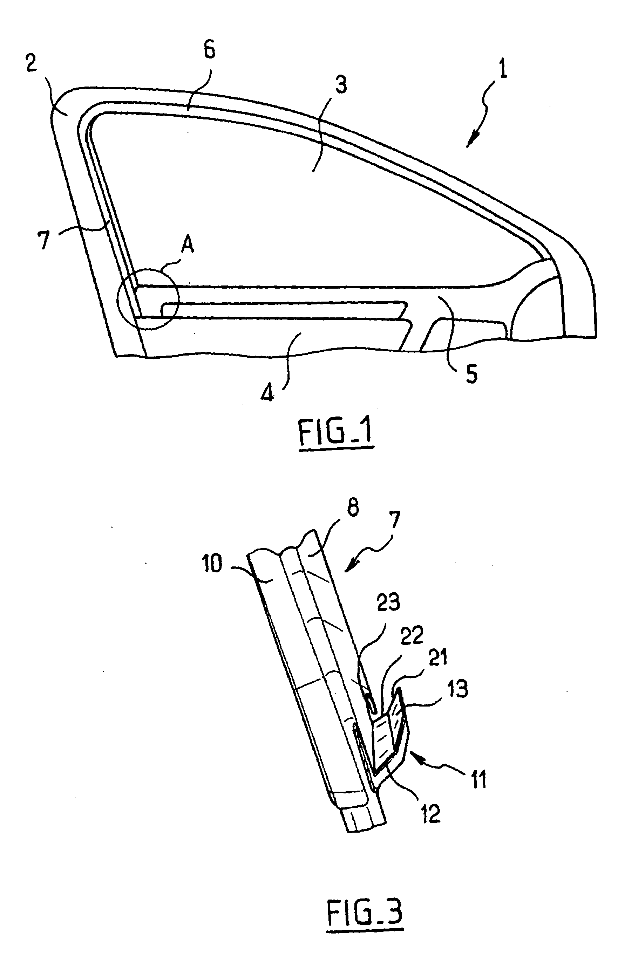

La figure 1 montre la partie supérieure d'une portière avant 1 d'automobile comportant un cadre métallique 2 définissant une ouverture 3 destinée à être occupée par une vitre coulissante. Le bas de la porte 1 comporte intérieurement un panneau de porte 4, qui est bordé en haut, au bord de l'ouverture 3, par un bandeau horizontal 5 de panneau, réalisé par exemple en polypropylène gainé, et servant entre autres, à l'appui du coude de l'occupant du véhicule.

Par ailleurs, les autres bords, latéraux et supérieur, de l'ouverture 3, sont finis par un habillage de cadre 6, généralement dans une matière plastique, et comportant notamment un montant sensiblement vertical 7 du côté du bord arrière de la portière avant. En fait, l'angle formé par le montant 7 et le bandeau 5 peut être légèrement supérieur à 90°, ce qui explique les difficultés de montage évoquées en tête de ce mémoire, dues aux effets de coin.

Le montant 7 de l'habillage de cadre pénètre légèrement en dessous de l'angle formé par le montant 7 et le bandeau 5, et est recouvert dans cette partie, par l'extrémité du bandeau 5 de panneau.

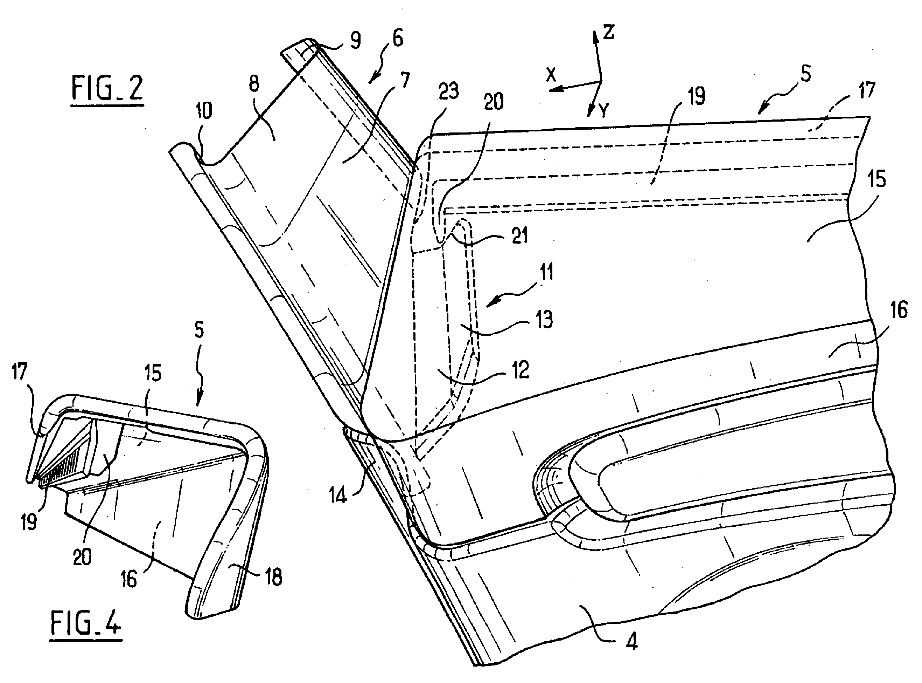

Le détail A de la figure 1 représente précisément cette liaison entre le bas du montant 7 et l'extrémité du bandeau 5, et est illustré plus complètement sur la figure 2.

Le montant 7 de l'habillage 6 est un profilé en U comportant une face plane 8 et deux ailes 9 et 10. La face plane 8 est dirigée vers l'ouverture 3. L'aile 9 passe à l'arrière du profilé métallique intérieur (non représenté) du cadre 2 de porte, du côté extérieur de la porte, un joint d'étanchéité en caoutchouc étant prévu entre le cadre 2 et l'aile 9. L'aile 10 a une double courbure qui lui permet de venir s'appliquer à l'avant contre un épaulement (non représenté) formé dans le cadre 2, du côté intérieur de la porte.

Dans la partie basse du montant 7, destinée à être couverte par le bandeau 5 et montrée en pointillés sur la figure 2 et en traits pleins sur la figure 3, est prévue, venue de moulage, une partie en saillie 11 formée obliquement (à environ 45°) sur le bas de la face 8 du montant 7, et comportant deux plans relevés vers le haut 12 et 13, le plan 13 étant plus pentu que le plan 12 et formant une rampe.

L'arrière et la face 8 du montant 7 sont échancrés en 23 juste en dessous de la zone de recouvrement par le bandeau 5.

Le bas de l'aile 10 du montant 7, une fois mis en place sur la cadre de porte 2, est recouvert du côté intérieur de la porte par une aile 14 du panneau 4. C'est ensuite qu'est placé le bandeau creux 5. Celui-ci est de forme allongée et comporte une assez large face de dessus 15 servant d'appui, bordée d'une face avant décorative 16, d'une courte face arrière 17. La face avant 16 forme un retour latéral 18. Sous la face de dessus 15, une réglette verticale 19, appelée clef, est destinée à coopérer avec le lécheur de l'ouverture de porte. À l'extrémité de cette réglette 19 est formé un doigt en relief 20 sous forme d'une plaquette orientée transversalement à la réglette 19 (transversalement à l'axe X).

Lorsque le bandeau 5 est mis en place par le monteur en l'appuyant verticalement vers le bas, le doigt 20 vient rencontrer la rampe 11 sur son bord supérieur le plus pentu 21, ce qui force le bas du montant 7 à se rapprocher du bandeau en direction X et en direction Y, ce qui réduit à zéro le jeu dans ces deux directions au niveau de la liaison habillage/bandeau.

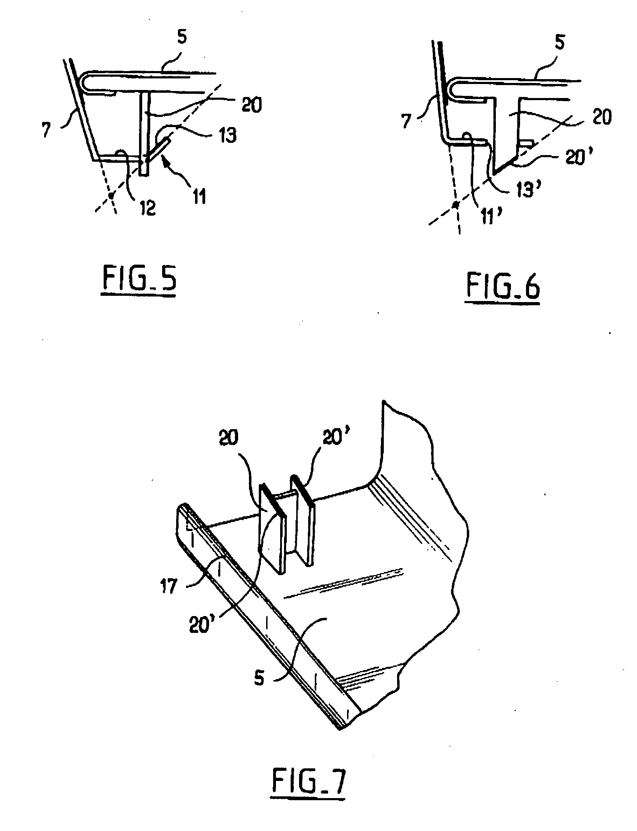

Les figures 2 à 4 décrites ci-dessus montrent un premier mode de réalisation de l'invention, schématisé sur la figure 5, selon lequel l'effet de coin exercé entre les premier et second reliefs des premier et second profilés est produit par la coopération d'un doigt 20 attaché au bandeau 5 et d'une rampe ou d'un plan incliné prévu sur le plan 13 attaché à la partie basse du montant 7, cette coopération forçant la déformation vers la droite de la figure 5 et le rapprochement du montant 7 vers le bandeau quand celui-ci descend lors du montage, les traits épais sur le panneau 7 et le plan 13 indiquant la zone de frottement forcé au cours du montage.

Selon un second mode de réalisation schématisé sur la figure 6, l'effet de coin est produit par la coopération entre une rampe 20' prévue sur l'extrémité du doigt 20 attaché au bandeau 5 et du bord 13' d'un trou prévu dans une partie 11' attachée en saillie à la partie basse du montant 7. Le rapprochement se fait donc par la pente 20' se trouvant sur le doigt 20. En effet, initialement, le doigt 20 ne se trouve pas en face du trou. La pente 20' permet son insertion dans le trou 13. Ensuite, après insertion, le doigt 20 est mis sous contrainte à l'intérieur du trou, ce qui permet le rapprochement des deux pièces et un jeu nul. Pour une meilleure stabilité et une plus grande solidité, le doigt 20 présente une section en H permettant ainsi la présence de deux pentes 20'.

Le choix de l'une ou l'autre solution s'effectue en fonction des contraintes géométriques et plus particulièrement des contraintes de démoulage.

## Revendications

1. Agencement de porte de véhicule automobile comportant un cadre (2) entourant une ouverture (3) dotée d'au moins un premier côté et d'un second côté faisant entre eux un angle proche d'un angle droit, le premier côté étant couvert d'un premier profilé (7) non fixé au cadre (2) dans la zone dudit angle, le second côté étant couvert d'un second profilé (5) venant recouvrir l'extrémité du premier profilé (7) dans la zone dudit angle, **caractérisé en ce que** le premier profilé (7) et le second profilé (5) comportent dans la zone dudit angle recouverte par le second profilé (5) un premier (13 ; 13') et un second (20 ; 20') reliefs susceptibles de venir en appui l'un sur l'autre lors du montage du second profilé (5) sur l'extrémité du premier profilé (7), les formes du premier et du second reliefs (13, 20 ; 13', 20') étant agencées pour que leur appui mutuel engendre une force de rapprochement entre le premier profilé (7) et le second profilé (5).

2. Agencement selon la revendication 1, **caractérisé en ce que** le premier relief (13) est une rampe oblique formée sur le premier profilé (7) et le second relief (20) est un doigt formé sous le second profilé (5) de manière à rencontrer la rampe oblique (13).

3. Agencement selon la revendication 2, **caractérisé en ce que** la rampe (13) est oblique dans deux directions transversales.

4. Agencement selon la revendication 1, **caractérisé en ce que** le premier relief est un bord (13') formé sur une saillie attachée au premier profilé (7).et le second relief est une rampe (20') formée sous le second profilé (5).

5. Agencement selon la revendication 4, **caractérisé en ce que** le premier relief est le bord (13') d'un trou formé dans ladite saillie attachée au premier profilé (7) et le second relief est une rampe (20') formée à l'extrémité d'un doigt (20) attaché sous le second profilé (5).

6. Agencement selon l'une quelconque des revendications 1 à 5, **caractérisé en ce que** le premier relief (13 ; 13') et/ou le second relief (20 ; 20') sont venus de moulage avec le premier profilé (7) et le second profilé (5) respectivement.

7. Agencement selon l'une quelconque des revendications 1 à 6, **caractérisé en ce que** le premier profilé (7) est un montant de l'habillage de cadre et le second profilé (5) est le bandeau de panneau de porte.

## Claims

1. Automotive vehicle door arrangement comprising a frame (2) surrounding an opening (3) that has at least one first side and one second side together making a corner at an angle that is nearly a right angle, the first side being covered by a first profile (7) not attached to the frame (2) in the region of the said corner, the second side being covered by a second profile (5) that overlaps the end of the first profile (7) in the region of the said corner, **characterized in that** the first profile (7) and the second profile (5) comprise, in the region of the said corner that is overlapped by the second profile (5), a first (13; 13') and a second (20; 20') relief which reliefs are able to press against one another when the second profile (5) is mounted on the end of the first profile (7), the shapes of the first and second reliefs (13, 20; 13', 20') being designed so that as they press together this generates a force that causes the first profile (7) and the second profile (5) to move closer together.

2. Arrangement according to Claim 1, **characterized in that** the first relief (13) is an oblique ramp formed on the first profile (7), and the second relief (20) is a finger formed under the second profile (5) so that it engages with the oblique ramp (13).

3. Arrangement according to Claim 2, **characterized in that** the ramp (13) is oblique in two transverse directions.

4. Arrangement according to Claim 1, **characterized in that** the first relief is an edge (13') formed on a protrusion attached to the first profile (7), and the second relief is a ramp (20') formed under the second profile (5).

5. Arrangement according to Claim 4, **characterized in that** the first relief is the edge (13') of a hole formed in the said protrusion attached to the first profile (7), and the second relief is a ramp (20') formed at the end of a finger (20) attached under the second profile (5).

6. Arrangement according to any one of Claims 1 to 5, **characterized in that** the first relief (13; 13') and/or the second relief (20; 20') are moulded as an integral part of the first profile (7) and of the second profile (5) respectively.

7. Arrangement according to any one of Claims 1 to 6, **characterized in that** the first profile (7) is an upright of the door frame trim and the second profile (5) is the door fascia.

## Patentansprüche

1. Türanordnung für ein Kraftfahrzeug mit einem Rahmen (2), der eine Öffnung (3) umgibt, die mit mindestens einer ersten Seite und einer zweiten Seite versehen ist, die dazwischen einen Winkel nahe einem rechten Winkel bilden, wobei die erste Seite von einem ersten Profil (7) bedeckt wird, das im Bereich des Winkels nicht an dem Rahmen (2) befestigt ist, wobei die zweite Seite von einem zweiten Profil (5) bedeckt wird, das das Ende des ersten Profils (7) im Bereich des Winkels bedeckt, **dadurch gekennzeichnet, dass** das erste Profil (7) und das zweite Profil (5) im Bereich des von dem zweiten Profil (5) bedeckten Winkels eine erste (13; 13') und eine zweite (20; 20') Strukturierung aufweisen, die bei der Montage des zweiten Profils (5) an das Ende des ersten Profils (7) in Anlage aneinander kommen können, wobei die Formen der ersten und der zweiten Strukturierung (13, 20; 13', 20') dazu ausgeführt sind, damit ihre gegenseitige Anlage eine Annäherungskraft zwischen dem ersten Profil (7) und dem zweiten Profil (5) erzeugt.

2. Anordnung nach Anspruch 1, **dadurch gekennzeichnet, dass** die erste Strukturierung (13) eine schräge Rampe ist, die am ersten Profil (7) ausgebildet ist, und die zweite Strukturierung (20) ein Finger ist, der unter dem zweiten Profil (5) so ausgebildet ist, dass er auf die schräge Rampe (13) trifft.

3. Anordnung nach Anspruch 2, **dadurch gekennzeichnet, dass** die Rampe (13) in zwei Querrichtungen schräg verläuft.

4. Anordnung nach Anspruch 1, **dadurch gekennzeichnet, dass** die erste Strukturierung ein an einem am ersten Profil (7) befestigten Vorsprung ausgebildeter Rand (13') ist und die zweite Strukturierung eine unter dem zweiten Profil (5) ausgebildete Rampe (20') ist.

5. Anordnung nach Anspruch 4, **dadurch gekennzeichnet, dass** die erste Strukturierung der Rand (13') eines in dem am ersten Profil (7) befestigten Vorsprung ausgebildeten Lochs ist und die zweite Strukturierung eine am Ende eines unter dem zweiten Profil (5) befestigten Fingers (20) ausgebildete Rampe (20') ist.

6. Anordnung nach einem der Ansprüche 1 bis 5, **dadurch gekennzeichnet, dass** die erste Strukturierung (13; 13') und/oder die zweite Strukturierung (20, 20') einstückig mit dem ersten Profil (7) bzw. dem zweiten Profil (5) geformt sind.

7. Anordnung nach einem der Ansprüche 1 bis 6, **dadurch gekennzeichnet, dass** das erste Profil (7) eine Stütze der Rahmenverkleidung ist und das zweite Profil (5) die Leiste der Türschale ist.
